# EUROPEAN PATENT APPLICATION

(11) **EP 3 747 581 A1**
(43) Date of publication of application: **09.12.2020**
(21) Application number: 19382467.9
(22) Date of filing: 06.06.2019
(51) Int. Cl.: B23D 43/02

(54) **BROACH FOR A BROACHING MACHINE**

(71) Applicant: EKIN, S.Coop., 48340 Amorebieta (Bizkaia) (ES)
(72) Inventor: CELAYA GOROSTIZA, Guillermo, 48340 AMOREBIETA (BIZKAIA) (ES)
(74) Representative: Plasseraud IP

(57) **Abstract**

The present invention relates to a broach for a broaching machine, the broach being usable for machining parts by stripping off material, comprising at least one tooth (1) for stripping off the material, which has a detaching face (1.1) for stripping off material and a back face (1.2) for receiving stripped material, in addition to two side faces (1.3) and an cutting face (1.4) joining the detaching face (1.1) with the back face (1.2); a blade (2) for locating the at least one tooth (1); a chip chamber (1.7) as an open cavity, the chip chamber (1.6) being located longitudinally immediately after the cutting face (1.4); and a leading edge (1.5) for cutting the part to be machined, the leading edge (1.5) being configured with a rounded shape, which is located in correspondence with a union of the detaching face (1.1) with the cutting face (1.4).

## Description

### Technical Field

The present invention relates to the industry dedicated to broaching machines, and more specifically to the industry dedicated to broaches as multi-edge cutting tools for broaching machines.

### State of the Art

A broaching machine, i.e., a machine tool using broaches for machining parts by means of stripping off material, is widely known today. Likewise, broaches correspond to multi-edge cutting tools.

Over time, both the stripping off of the material, with the service life of the broach being reduced to the least extent possible, and a result minimizing later surface finishing processes are expected to be obtained. Accordingly, using broaches with a body, also commonly referred to as blade, made of hardened steel, primarily to lower a cost associated with the use of broaches, is known. Likewise, it is known that broaches have teeth in correspondence with these bodies for making contact with the part to be machined, and therefore for the corresponding stripping off of the material.

For the purpose of stripping off the material, with the service life of the teeth, and therefore the broaches, being as long as possible, said teeth are completely or partially made of hard metal. This solution however, makes it impossible to obtain degrees of finish and machining according to expected results given primarily a fixing of the corresponding portions of hard metal in the broaches.

The fixed arrangement of the portions of hard metal tends to experience primarily lateral displacements resulting in surface flaws in the machined part, in addition to breaks or separations with respect to the rest of the broaches made of hardened steel.

In view of the described drawback or limitation of the solutions existing today, a solution which allows obtaining surface finishes according to desired results, while at the same time not compromising the service life of the broaches is needed.

### Object of the Invention

For the purpose of fulfilling this objective and solving the technical problems discussed up until now, in addition to providing additional advantages which will be seen below, the present invention provides a broach for a broaching machine, the broach being usable for machining parts by stripping off material.

The broach comprises at least one tooth for stripping off the material, which has a detaching face for stripping off material and a back face for receiving stripped material, in addition to two side faces and a cutting face joining the detaching face with the back face; a blade for locating the at least one tooth; and a chip chamber as an open cavity, the chip chamber being located longitudinally immediately after the cutting face.

The present broach further comprises a leading edge for cutting the part to be machined, the leading edge being configured with a rounded shape. Accordingly, the rounded shape of the leading edge is located in correspondence with a union of the detaching face with the cutting face.

The rounded shape is preferably determined by a radius of curvature having a nominal value between 5 µm and 65 µm.

Preferably, the blade and the at least one tooth are made of hard metal, the blade and the at least one tooth being formed from one and the same part.

The present broach preferably comprises a support for being fixed to the broaching machine, the blade being fixed to the support by means of an epoxy-type resin. This resin is preferably arranged according to a thickness between 0.03 mm and 0.3 mm.

Preferably, a height of the at least one tooth according to the cutting face decreases from the detaching face to the back face. Said height decreases according to an angle of fall having a nominal value preferably between 0.5° and 4.5°.

The present broach preferably comprises a transverse deviation in the leading edge, such that two unions of the leading edge with the two side faces are defined according to two different longitudinal points along the blade. Accordingly, the transverse deviation is defined by a transverse angle having a nominal value preferably between 2° and 5°.

The present broach preferably comprises a longitudinal deviation in at least one of the two side faces, and preferably in both, from the detaching face to the back face, such that a thickness of the at least one tooth decreases from the detaching face to the back face. Accordingly, the longitudinal deviation of each of the side faces is defined by a longitudinal angle having a nominal value preferably between 0.5° and 3.5°.

The at least one tooth has an arithmetic mean roughness preferably between 0.01 µm and 0.16 µm. Additionally or alternatively, the at least one tooth has a mean roughness preferably between 0.01 µm and 0.66 µm.

Preferably, there are at least two teeth, the chip chamber being located between the at least two teeth and configured according to a previous radius and a subsequent radius, the previous radius being able to be defined according to the detaching face of one of the teeth and the subsequent radius being able to be defined according to the back face of the other one of the teeth.

The previous radius has a nominal value preferably between 3.5 mm and 7 mm. Additionally or alternatively, the subsequent radius has a nominal value preferably between 1 mm and 3 mm.

### Description of the Drawings

Figure 1 shows a schematic view of one side of a blade and teeth comprised in a broach for a broaching machine object of the invention.
Figure 2 shows a partial schematic view of the blade and teeth of Figure 1.
Figure 3 shows a front schematic view of the blade and one of the teeth comprised in the broach for the broaching machine object of the invention.
Figure 4 shows a schematic view in sections of another side of the blade and the teeth, the blade being arranged in a support also comprised in the broach for the broaching machine object of the invention.
Figure 5 shows a front schematic view of the blade and the teeth in the support.
Figure 6 shows a partial schematic plan view of the blade and the teeth in the support.

### Detailed Description of the Invention

The present invention relates to a broach for a broaching machine, the broach being usable for machining parts by stripping off material, such as by rough machining for example. For the purpose of facilitating understanding, the invention is described below using a Cartesian spatial coordinate system (X, Y, Z) as a reference.

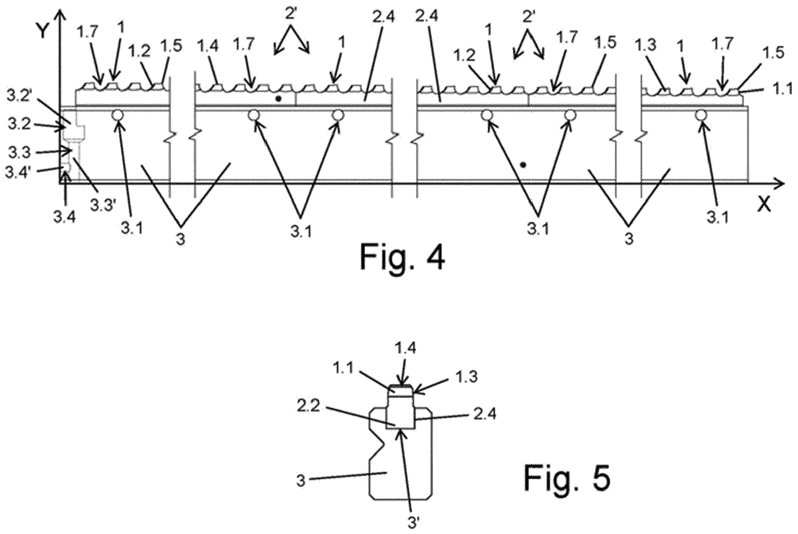

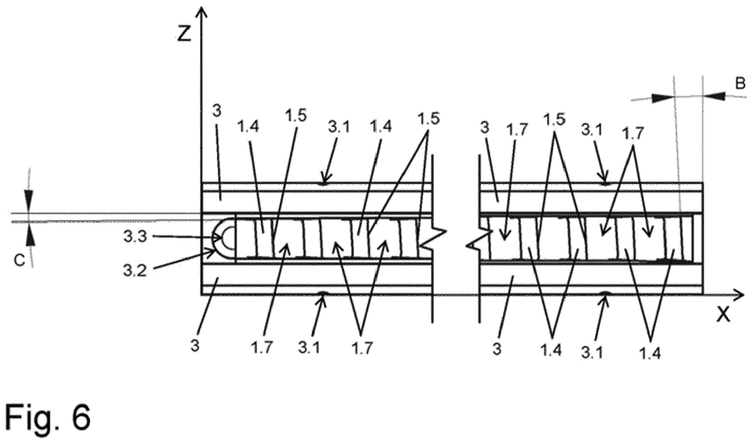

This coordinate system (X, Y, Z) is formed or defined by a longitudinal axis (X), which can be seen in Figures 4 and 6, a vertical axis (Y), which can be seen in Figure 4, and a depth axis (Z), which can be seen in Figure 6. These three axes (X, Y, Z) are considered orthogonal to one another.

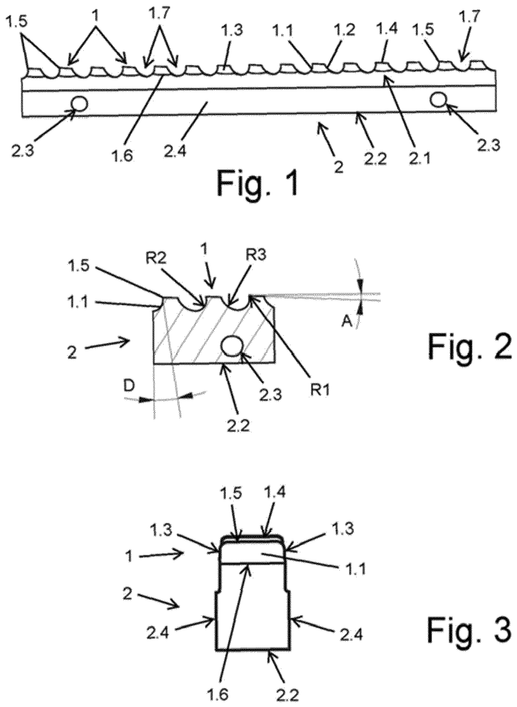

The broach comprises at least one tooth (1). It preferably comprises a set of said teeth (1), with said teeth being arranged longitudinally aligned with one another, according to the longitudinal axis (X). Each of the teeth (1) has a front part defined by a detaching face (1.1) configured for stripping off material and a rear or back part defined by a back face (1.2) configured for receiving at least part of the stripped material, the back face (1.2) being longitudinally opposite the detaching face (1.1), as can be seen in Figure 1 for example.

Accordingly, each of the teeth (1) additionally has side faces (1.3), preferably two, and a cutting face (1.4). Specifically, the side faces (1.3) extend longitudinally between the detaching face (1.1) and the back face (1.2), preferably as a union between same. See Figures 1 and 3.

The cutting face (1.4), in turn, also extends longitudinally between the detaching face (1.1) and the back face (1.2), preferably as a union between same. Likewise, said cutting face (1.4) additionally extends laterally between the side faces (1.3), preferably as a union between same, according to the depth axis (Z).

The present broach comprises on leading edge (1.5) for each of the teeth (1). The leading edge (1.5) corresponds with a cutting portion of the tooth (1) in the part to be machined. The leading edge (1.5) is arranged as a part or an area of the tooth (1) that is the farthest away from a base (1.6) of said tooth (1). More specifically, said leading edge (1.5), referenced for example in Figures 2 and 4, is located in correspondence with a union of the detaching face (1.1) with the cutting face (1.4).

Accordingly, the leading edge (1.5) is configured with a rounded shape. The rounded shape is determined according to an externally convex configuration. This rounded configuration of the teeth (1), and more specifically of the leading edges (1.5), rather than being in the form of a pointed-type sharp area or ridge, considerably prolongs the service life of the teeth (1) according to an optimal stripping off of the material when the cutting portion which is farthest away from the base (1.6) is structurally reinforced.

Additionally, said rounded configuration of the teeth (1), and more specifically of the leading edges (1.5), provides for the teeth (1) cutting the part in a less aggressive manner, i.e., the cutting is attenuated. This in turn results in a considerable reduction in vibrations generated when stripping off the material as a result of the rounded leading edge (1.5) cutting the corresponding part.

Therefore, in addition to reducing wear and eliminating breaks in the leading edges (1.5), the rounded shape according to the externally convex configuration provides a significantly better i.e., smoother and less irregular surface finish of the machined parts than in the case of using a ridge or sharp configuration. The improvement provided in the surface finish of the machined parts represents a significant reduction in total production time of the parts, which results in a reduction in costs and an increase in productivity.

The mentioned rounded shape is determined by a radius of curvature (R1), preferably between 5 micra and 65 micra, more preferably between 10 micra and 55 micra, and even more preferably between 15 µm and 45 µm. Therefore, a degree of insertion into the part and a degree of reduction in vibrations, in addition to a degree of wear and elimination of the breaks, are optimized.

In order to contribute to obtaining the described object of providing optimal stripping off of the material according to a considerable reduction in vibrations generated and a significantly better surface finish of the machined parts, in addition to minimizing heating that can be generated both in the part and in the teeth (1) as a result of friction with one another, the present broach is additionally configured such that the cutting faces (1.4) are arranged such that a height of the teeth (1), i.e., the projection from the base (1.6) to the cutting face (1.4) in the direction and sense of the vertical axis (Y), decreases from a correspondence with the detaching face (1.1) to a correspondence with the back face (1.2) of each of same.

In other words, this decrease in height of the teeth (1) corresponds with an angle between each of the cutting faces (1.4) and an imaginary horizontal longitudinal plane that can be defined by the longitudinal axis (X) and the depth axis (Z), such that, with respect to said plane, a distance to the cutting face (1.4) in correspondence with the detaching face (1.1) is larger than that to said cutting face (1.4) in correspondence with the back face (1.2).

Said decrease in height is defined according to an angle of fall (A). The angle of fall (A) has a nominal value preferably between 0.5° and 4.5°; more preferably between 1.1° and 3.1°; and even more preferably between 1.8° and 2.8°. See Figure 2.

In order to contribute to obtaining the object indicated above, the present broach is additionally configured such that it comprises a transverse deviation in the leading edges (1.5), such that unions of the leading edge (1.5) with each of the two side faces (1.3) are defined according to two different longitudinal points along the blade (2), according to the longitudinal axis (X). This transverse deviation is defined by a transverse angle (B) having a nominal value between 2° and 5°. See Figure 6.

According to this transverse deviation, each of the teeth (1), and more specifically each of the leading edges (1.5), cuts the part for rough machining in a progressive manner. Thus, the leading edges (1.5) are arranged to initiate cutting from one of the unions with one of the side faces (1.3) and laterally increasing contact with the part in a progressive manner until cutting the other one of the unions with the other one of the side faces (1.3).

In order to contribute to obtaining the described object indicated above, the present broach is additionally configured such that it comprises a longitudinal deviation in at least one of the two side faces (1.3) such that a thickness of the teeth (1) decreases, according to the depth axis (Z), from one correspondence with the detaching face (1.1) to one correspondence with the back face (1.2) . This longitudinal deviation is preferably defined by a longitudinal angle (C) having a nominal value between 0.5° and 3.5°.

In other words, the present broach is additionally configured such that it comprises the longitudinal deviation in at least one of the two sides (1.3) from the detaching face (1.1) to the back face (1.2), such that a separation between the two side faces (1.3) is larger in correspondence with a union with the detaching face (1.1) than in correspondence with a union with the back face (1.2).

That is, the present broach is additionally configured such that it comprises said longitudinal deviation in at least one of the two side faces (1.3) and with respect to an imaginary central vertical longitudinal plane that can be defined by cutting the at least one tooth (1), from the base (1.6) to the cutting face (1.4), such that the corresponding side face (1.3) in the union with the back face (1.2) is closer to the mentioned imaginary central vertical longitudinal plane than it is in the union with the detaching face (1.1).

Optionally, this longitudinal deviation is arranged in an individual manner according to each of the teeth (1). Alternatively, said longitudinal deviation is arranged in a single manner for the teeth (1) comprised in the broach, as can be seen in Figure 6.

Preferably, said longitudinal deviation is arranged or defined according to each of the side faces (1.3). Likewise, the longitudinal deviation is optionally defined in an individual manner for each of the teeth (1). Alternatively, the longitudinal deviation is defined in a single manner for the teeth (1) comprised in the broach, as results from Figure 6.

The present broach further comprises a chip chamber (1.7) located immediately after the corresponding cutting face (1.4), according to the direction of the longitudinal axis (X). The chip chamber (1.7) is arranged for receiving chips generated when stripping off the material. Said chip chamber (1.7) is configured as an open chamber. This open configuration corresponds both laterally according to the direction of the depth axis (Z) and vertically upwards according to the vertical axis (Y).

Likewise, the chip chamber (1.7) is arranged for the removal or discharge of the chips received with respect to same. For the purpose of optimizing said removal or discharge of the chips of the chip chambers (1.7) during rough machining, said chambers (1.7) are configured according to a previous radius (R2) and a subsequent radius (R3).

The previous radius (R2) is that which can be defined in correspondence with the detaching face (1.1) of one of the teeth (1) and the subsequent radius (R3) according to the back face (1.2) of the mentioned tooth (1). Accordingly, the previous radius (R2) has a nominal value preferably between 3.5 mm and 7 mm. Likewise, the subsequent radius (R3) has a nominal value preferably between 1 mm and 3 mm. See Figure 2.

The chip chamber (1.7) is arranged such that it defines an angle of inclination (D) in the leading edge (1.5) with respect to an imaginary vertical transverse plane that can be defined by the vertical axis (Y) and the depth axis (Z). The angle of inclination (B) is referenced in Figure 2.

This angle of inclination (D) has a nominal value preferably between 4° and 14°, more preferably between 5.5° and 12°, and even more preferably between 7° and 10°. According to said angle (D), removal or stripping off of the material with respect to the part is favored while at the same time vibrations and wear of the teeth (1) are reduced.

According to one option, the angle of inclination (D) is defined by the imaginary vertical transverse plane and a middle area of the rounded shape of the leading edge (1.5). According to another option, the angle of inclination (D) is defined by said plane and an area of the end of the leading edge (1.5) and start of the detaching face (1.1).

For the purpose of even further optimizing the removal or discharge of the chips with respect to the chip chamber (1.7), such that a greater and more efficient rough machining capacity is provided, the teeth (1) are configured such that they have an arithmetic mean roughness or a value of the mean roughness between 0.01 µm and 0.16 µm, commonly referenced as "Ra" and/or mean roughness, or a depth value of the mean roughness between 0.01 µm and 0.66 µm, commonly referenced as "Rz".

These roughness of the teeth (1) according to the chip chamber (1.7), and therefore according to the detaching face (1.1) and the back face (1.2) are highly relevant given that they prevent the generated chips from being retained on the surfaces of said faces (1.1, 1.2). Specifically, said values of said arithmetic mean roughness and/or said mean roughness prevent the generated chips from being retained both by friction and by the embedding or housing thereof in nicks on the surface.

For the purpose of providing an optimal compromise between a friction such that the heating generated both in the part and on the contact surfaces of the teeth (1) is minimized, a rough machining speed such that it is maximized, and the desired surface finish on the part, said values of said the arithmetic mean roughness and/or said mean roughness are given in the teeth (1) according to their contact surfaces with the part.

The teeth (1) are preferably made of hard metal. The fact that all the teeth (1) are made of hard metal provides greater resistance against the stresses generated in rough machining or when stripping off the material, such as bending and shear stresses, in addition to minimizing wear due to friction, compared to teeth which are made partially of materials, such as hardened steel for example.

The broach comprises a blade (2) for the arrangement or location of the teeth (1). Therefore, the blade (2) corresponds with a body carrying the teeth (1). Likewise, the broach comprises the blade (2) which is made up or formed by at least one segment (2'), and preferably two, three, four, or more of the mentioned individual or independent segments (2'). Figure 4 shows an embodiment in which the segments (2') are three in number.

Preferably, the blade (2) and the teeth (1) are formed from one and the same part such that they are one-piece. The present broach thereby prevents arranging the teeth (1) fixed to the blade (2), for example by means of adhesives or welds. Thus, the broach is provided in a more consistent, more resistant manner, i.e., with a longer service life.

The present broach comprises a blade holder or support (3) for being fixed to the broaching machine. The support (3) is arranged in a movable manner, according to at least a movement of back and forth rectilinear longitudinal displacement. Additionally, the support (3) is configured for housing the blade (2) according to the number of corresponding segments (2'), the segments (2') being longitudinally aligned with one another according to the mentioned longitudinal axis (X).

Accordingly, the support (3) comprises an elongated slot (3') in the form of a recess or channel for partially housing and surrounding the blade (2), the teeth (1) and preferably part of the blade (2) projecting externally.

Specifically, the blade (2) comprises an upper edge (2.1) and a lower edge (2.2), the upper edge (2.1) being where the teeth (1) are located and the lower edge (2.1) being where the support (3) is secured. As can be seen in Figure 4, these edges (2.1, 2.2) are arranged vertically opposite one another according to the vertical axis (Y).

Accordingly, the upper edge (2.1) corresponds to an area of union of the blade (2) with the base (1.6) of the teeth (1) and to an area of union of the blade (2) with the chip chambers (1.7) according to a lower portion thereof, i.e., the area closest to the lower edge (2.2).

A union between the back face (1.2) of one of the teeth (1) and the detaching face (1.1) of the tooth (1) longitudinally located immediately after the mentioned preceding tooth (1), according to the longitudinal axis (X), is determined in said lower portion.

In other words, in said lower portion the union is determined between the detaching face (1.1) of one of the teeth (1) and the back face (1.2) of the tooth (1) longitudinally located immediately after the mentioned preceding tooth (1), according to the direction and sense of the longitudinal axis (X). See Figure 4 for example.

According to at least the upper edge (2.1), the blade (2) is also preferably configured such that it has an arithmetic mean roughness between 0.01 µm and 0.16 µm and/or mean roughness between 0.01 µm and 0.66 µm. In other words, the blade (2) is also configured such that it has said arithmetic mean roughness and/or said mean roughness according to its contact surfaces with the part.

The blade (2) is secured in the support (3), and more specifically in the slot (3'), for use of the broach. With a main function of retaining the blade (2) in the support, i.e., preventing the lower edge (2.2) from coming out of said slot (3') in an unwanted manner, preferably the support (3) comprises through openings (3.1) and the blade (2) comprises holes (2.3).

The through openings (3.1) and the holes (2.3) are aligned in the broach such that retaining elements, such as screws or the like, are arranged through the through openings (3.1) and housed in the holes (2.3). Accordingly, said retaining elements are preferably arranged screwed into the holes (2.3), and optionally also the through openings (3.1). Arrangement of the retaining elements in the broach is thus assured, and therefore so is the retained arrangement of the blade (2) in the support (3) during the corresponding rough machining or stripping off of the material.

For the purpose fixing the blade (2) and the support (3), the present broach comprises an adhesive commonly referred to as a structural or engineering adhesive. This adhesive is polyepoxide or epoxy resin, i.e., a thermosetting polymer that hardens when it is mixed with a catalyzing, solidifying, or hardening agent.

Said adhesive is arranged in contact with the slot (3') of the support (3) and the blade (2) and is then subjected to a curing treatment or process at a temperature preferably between 15°C and 75°C, and more preferably between 25°C and 60°C. Therefore, the adhesive acquires an enhanced resistance to heat and to chemical agents than if it is dried at room temperature.

These resistances, or at least the resistance to heat, of the adhesive provide for a longer continuous usage time of the broach when using same for stripping off the material, the desired surface finish of the machined part being maintained. This is because the cured adhesive better withstands the heating generated by friction between the teeth (1) and the possible heating of the blade (2) with the part during the machining or rough machining thereof.

The adhesive, and more specifically the epoxy resin, is applied such that it is in contact both with the slot (3') of the support (3) and with the blade (2). Therefore, the epoxy resin fixes the blade (2) in the slot (3') in addition to absorbing the displacements according to the vertical direction according to the vertical axis (Y) as a result of contact against the part during machining.

This absorption is slight but significant, given that it allows mitigating abrupt forces that tend to be generated when stripping off the material, resulting in stresses on the teeth (1) and the blade (2) to the support (3). The epoxy resin therefore provides a significant contribution to obtaining the desired surface finish.

For the purpose of optimizing compromise between the mentioned absorption and the mentioned fixing between the support (3) and the blade (2), the epoxy resin is applied according to a layer of thickness preferably between 0.03 mm and 0.3 mm, and more preferably between 0.05 mm and 0.25 mm.

Preferably, the epoxy resin adheres the blade (2), according to the lower edge (2.2), to a base of the slot (3') of the support (3). Optionally, said resin is additionally arranged joining or adhering sides (2.4) of the blade (2) and side walls of the slot (3') to one another. Therefore, the epoxy resin is arranged such that in addition to working under compression, it also works under shearing, i.e., under shear stresses.

The support (3) comprises a housing (3.2) for housing a stop (3.2') comprised in the present broach, such that in the displacement of the broach stripping off the material, the blade (2) contacts said stop (3.2'), with the longitudinal displacement thereof being limited or impeded. The stop (3.2') has defined therein a step or the like, such that it establishes support of the blade (2), and more specifically of the lower edge (2.2), in the vertically downward direction according to the vertical axis (Y), in addition to a support in the longitudinal direction in a sense according to the longitudinal axis (X).

For arranging the stop (3.2') in the support (3), said support (3) comprises an elongated space (3.3) for arranging a protrusion (3.3') of the stop (3.2'). This elongated space (3.3) is located vertically after the housing (3.2), according to the vertical axis (Y). The elongated space (3.3) is preferably arranged concentric to an imaginary central vertical axis of the housing (3.2).

Likewise, and for the purpose of arranging the stop (3.2') unequivocally for the purpose of establishing the mentioned supports for the blade (2), the support (3) comprises a passage (3.4) arranged transverse to the elongated space (3.3). The passage (3.4) is preferably at least substantially parallel to the longitudinal axis (X) and to the depth axis (Z). Accordingly, a pin (3.4') comprised in the present broach is housed through said passage (3.4), in addition to being partially inserted in the protrusion (3.3') of the stop (3.2') for use of the broach. In a corresponding manner, said protrusion (3.3') has an area of insertion configured for receiving an end of the mentioned pin (3.4').

## Claims

1. A broach for a broaching machine, the broach being usable for machining parts by stripping off material, the broach comprising:
- at least one tooth (1) for stripping off the material, which has a detaching face (1.1) for stripping off material and a back face (1.2) for receiving stripped material, in addition to two side faces (1.3) and an cutting face (1.4) joining the detaching face (1.1) with the back face (1.2);
- a blade (2) for locating the at least one tooth (1);
- a chip chamber (1.7) as an open cavity, the chip chamber (1.7) being located longitudinally immediately after the cutting face (1.4);
**characterized in that** it additionally comprises:
- a leading edge (1.5) for cutting the part to be machined, the leading edge (1.5) being configured with a rounded shape;
where the rounded shape of the leading edge (1.5) is located in correspondence with a union of the detaching face (1.1) with the cutting face (1.4).

2. The broach according to claim 1, **characterized in that** the rounded shape is determined by a radius of curvature (R1) having a nominal value between 5 µm and 65 µm.

3. The broach according to claim 1 or 2, **characterized in that** the blade (2) and the at least one tooth (1) are made of hard metal, the blade (2) and the at least one tooth (1) being formed from one and the same part.

4. The broach according to any one of claims 1 to 3, **characterized in that** it additionally comprises a support (3) for being fixed to the broaching machine, the blade (2) being fixed to the support (3) by means of an epoxy-type resin.

5. The broach according to claim 4, **characterized in that** the resin is arranged according to a thickness between 0.03 mm and 0.3 mm.

6. The broach according to any one of claims 1 to 5, **characterized in that** a height of the at least one tooth (1) according to the cutting face (1.4) decreases from the detaching face (1.1) to the back face (1.2).

7. The broach according to claim 6, **characterized in that** the height decreases according to an angle of fall (A) having a nominal value between 0.5° and 4.5°.

8. The broach according to any of claims 1 to 7, **characterized in that** it comprises a transverse deviation in the leading edge (1.5), such that two unions of the leading edge (1.5) with the two side faces (1.3) are defined according to two different longitudinal points along the blade (2).

9. The broach according to claim 8, **characterized in that** the transverse deviation is defined by a transverse angle (B) having a nominal value between 2° and 5°.

10. The broach according to any of claims 1 to 9, **characterized in that** it comprises a longitudinal deviation in at least one of the two side faces (1.3) from the detaching face (1.1) to the back face (1.2), such that a thickness of the at least one tooth (1) decreases from the detaching face (1.1) to the back face (1.2).

11. The broach according to claim 10, **characterized in that** the longitudinal deviation corresponds with the two side faces (1.3).

12. The broach according to claim 10 or 11, **characterized in that** the longitudinal deviation is defined by a longitudinal angle (C) having a nominal value between 0.5° and 3.5°.

13. The broach according to any of claims 1 to 12, **characterized in that** the at least one tooth (1) has a arithmetic mean roughness between 0.01 µm and 0.16 µm and/or a mean roughness between 0.01 µm and 0.66 µm.

14. The broach according to any of claims 1 to 13, **characterized in that** there are at least two teeth (1), the chip chamber (1.7) being located between the at least two teeth (1) and configured according to a previous radius (R2) and a subsequent radius (R3), the previous radius (R2) being able to be defined according to the detaching face (1.1) of one of the teeth (1) and the subsequent radius (R3) being able to be defined according to the back face (1.2) of the other one of the teeth (1).

15. The broach according to claim 14, **characterized in that** the previous radius (R2) has a nominal value between 3.5 mm and 7 mm and/or the subsequent radius (R3) has a nominal value between 1 mm and 3 mm.
